# EUROPEAN PATENT APPLICATION

(11) **EP 4 583 295 A1**
(43) Date of publication of application: **09.07.2025**
(21) Application number: 23932672.1
(22) Date of filing: 29.07.2023
(51) Int. Cl.: H01M 50/449, H01M 50/489, H01M 50/451, H01M 50/443, H01M 50/403, H01M 10/0525

(54) **BATTERY SEPARATOR AND PREPARATION METHOD THEREFOR, AND SECONDARY BATTERY**

(30) Priority: 12.04.2023 CN 202310387138
(71) Applicant: Sinoma Lithium Battery Separator Co., Ltd., Zaozhuang, Shandong 277500 (CN)
(72) Inventor: BAI, Yaozong, Zaozhuang, Shandong 277500 (CN); BAI, Lin, Zaozhuang, Shandong 277500 (CN); LIU, Gaojun, Zaozhuang, Shandong 277500 (CN); TANG, Xiao, Zaozhuang, Shandong 277500 (CN); GAO, Feifei, Zaozhuang, Shandong 277500 (CN); SUN, Jing, Zaozhuang, Shandong 277500 (CN); ZHENG, Lei, Zaozhuang, Shandong 277500 (CN); MENG, Xianggan, Zaozhuang, Shandong 277500 (CN); QIN, Wenjuan, Zaozhuang, Shandong 277500 (CN); YANG, Hao, Zaozhuang, Shandong 277500 (CN)
(74) Representative: Huang, Liwei
(86) International application number: PCT/CN2023/110068
(87) International publication number: WO 2024/212399

(57) **Abstract**

A battery separator and a preparation method therefor, and a secondary battery, relating to the technical field of battery separators. The battery separator comprises: a base film; and an inorganic coating provided on at least one surface of the base film. A contact ratio k of inorganic particles to the base film in the longitudinal section of the battery separator is 15-90%; and the relationship among the contact ratio k, air permeability A1 of the base film and air permeability A2 of the coating per unit thickness meets: A1*k≥A2. The separator is improved to a certain extent in peel strength, puncture strength and air permeability, and the battery separator with both safety and high ion permeability is provided.

## Description

### TECHNICAL FIELD

The present disclosure relates to the technical field of battery separators, in particular to a battery separator and a preparation method therefor, and a secondary battery.

### BACKGROUND OF THE INVENTION

With "Carbon Peak" and "Carbon Neutral" being included in the government's work report, green and low carbon has been developing rapidly in China. The penetration rate of new energy vehicles, which are indispensable in the process of carbon emission reduction, has increased rapidly in the past two years, and power batteries, as an important part of the new energy vehicles, are constantly innovating in the technological research and development of their constituent materials.

As we all know, the main constituent materials of a lithium-ion battery include: a positive electrode, a negative electrode, an electrolyte, and a separator. Lithium ions move at both the positive and negative electrodes through a microporous structure of the separator so as to form a current, thereby completing the charging and discharging process. The microporous structure of the separator will directly affect the transmission efficiency of the lithium ions, thereby affecting the cycle performance, rate performance and other performance of the battery. Meanwhile, the separator made of polyolefin can play a very good insulating property, to prevent a short circuit triggered by direct contact of the positive and negative electrodes of the battery. However, in the long-term use of the battery, it is inevitable that an exothermic phenomenon will occur, a polyolefin chain segment of the polyolefin separator moves at a high temperature, the pore size contracts, and the permeability of the lithium ions is deteriorated, resulting in a reduction in service life of the battery. In order to solve the above problems, the surface of the polyolefin separator is usually coated with one or more layers of functional coatings, and common coatings mainly include inorganic filler coatings, polymer material coatings, and mixed coatings of inorganic fillers and polymer materials. The traditional inorganic coatings have a large air permeability increase, a low lithium ion shuttle rate, and poor adhesion between an inorganic coating and a substrate, and inorganic particles fall off during battery winding and battery charging and discharging, thereby affecting the safety performance and capacity of the battery.

In view of this, the present disclosure is proposed.

### SUMMARY OF THE INVENTION

A first objective of the present disclosure is to provide a battery separator.

A second objective of the present disclosure is to provide a preparation method for a battery separator.

A third objective of the present disclosure is to provide a secondary battery including the above battery separator.

In order to achieve the above objectives, in a first aspect of the present disclosure, a battery separator is provided, and includes:
a base film; and
an inorganic coating provided on at least one surface of the base film,
where a contact ratio k of inorganic particles to the base film in a longitudinal section of the battery separator is 15-90%; and
a relationship among the contact ratio k, air permeability A₁ of the base film and air permeability A₂ of the coating per unit thickness meets:
   A₁*k ≥ A₂, where a unit of the air permeability A₁ of the base film is s/100cc, and a unit of the air permeability A₂ of the coating per unit thickness is s/100cc/µm.

According to embodiments of the present disclosure, peel strength of the battery separator is more than 30 N/m, puncture strength of the coating per unit thickness is more than 6 gf/µm, and the air permeability of the coating per unit thickness is less than 20 s/100cc/µm.

According to embodiments of the present disclosure, the contact ratio k of the inorganic particles to the base film in the longitudinal section of the battery separator is 30-85%.

According to embodiments of the present disclosure, peel strength of the battery separator is more than 50 N/m, preferably more than 100 N/m, particularly more than 170 N/m, even more than 190 N/m, puncture strength of the coating per unit thickness is more than 9 gf/µm, preferably more than 12 gf/µm, and air permeability of the coating per unit thickness is less than 15 s/100cc/µm, preferably less than 10 s/100cc/µm.

In a second aspect of the present disclosure, a preparation method for the battery separator as described in the first aspect is provided, and includes the following steps:
(1) providing a base film;
(2) applying an inorganic coating slurry to at least one surface side of the base film to obtain an inorganic coating; and
(3) drying the base film and the inorganic coating to obtain the battery separator,
where a preparation method for the inorganic coating slurry in step (2) includes the following steps:
(2-1) adding 90-99 parts by weight of a solvent into a mixing tank, setting a rotation speed of an anchor paddle as 10 to 30 rpm, starting the anchor paddle, adding 1-10 parts by weight of thickening agent powder, after addition is complete, starting a dispersion impeller, where a rotation speed of the dispersion impeller is 500 to 1300 rpm, and mixing time is 80 to 120 min, and obtaining a thickening agent primary slurry;
adding 50-60 parts by weight of a solvent into a dual planetary mixing tank, adding 32-38 parts by weight of inorganic particles, where a volume of the inorganic particles and the solvent is kept to be 3/5 to 3/4 of volume of the dual planetary mixing tank, and a distance between a dispersion impeller and an upper liquid level of the inorganic particles and the solvent accounts for 1/4 to 1/2 of a height of the dual planetary mixing tank; a rotation speed of an anchor paddle of the dual planetary mixing tank is 10 to 30 rpm, a rotation speed of the dispersion impeller is 500 to 1300 rpm, and mixing time is 10 to 20 min, and obtaining an inorganic particle primary slurry;
(2-2)taking and adding 5-15 parts by weight of the thickening agent primary slurry to the inorganic particle primary slurry, where the rotation speed of the anchor paddle of the dual planetary mixing tank is 10 to 30 rpm, the rotation speed of the dispersion impeller is 500 to 1300 rpm, and mixing time is 10 to 20 min, and obtaining a thickened slurry; and
(2-3) enabling the thickened slurry to pass through a high-speed dispersing or grinding machine, controlling a temperature of the thickened slurry to be between 15°C and 30°C in the process to obtain a semi-finished slurry, after a temperature of the semi-finished slurry returns to a room temperature, adding 2-10 parts by weight of a binder and 0.03-0.2 parts by weight of a wetting agent, and then mixing for 20 to 40 min at a mixing rotation speed of 10 to 50 rpm so as to obtain the inorganic coating slurry;
pH of the inorganic coating slurry is 7 to 11, especially 7.8 to 9.8; viscosity is 5 to 200 mpa s, especially 10 to 130 mpa s; a volume average particle size D50_{slurry} is 0.01 to 2.5 µm, especially 0.1 to 1.2 µm, and a mean value of a Zeta potential absolute value is 0.025 to 0.3 V, especially 0.035 to 0.1 V;
in step (2), a tension of 2.5 to 5 N/m/µm per unit thickness and unit width of the base film is controlled to be applied in a coating process, and a difference between a coating rolling speed and a coating line speed is -50 to 50 m/min in the coating process; and
in step (3), a drying temperature of the coating per unit thickness is controlled at 20 to 50 °C/µm in a drying process, air supply frequency and air exhaust frequency of a drying oven are 20 to 45 Hz, and air supply frequency - air exhaust frequency ≤ 6 Hz.

In a third aspect of the present disclosure, a secondary battery is provided, and includes the battery separator as described in the first aspect.

Compared with the prior art, the technical solutions of the present disclosure have following beneficial effects.

According to the battery separator provided by the present disclosure, by controlling the contact ratio k of the inorganic particles to the base film in the longitudinal section of the battery separator to be 15-90%, and controlling the relationship among the contact ratio k, the air permeability A₁ of the base film and the air permeability A₂ of the coating per unit thickness to meet: A₁*k ≥ A₂, the obtained separator is improved to a certain extent in peel strength, puncture strength and air permeability, and the battery separator with both safety and high ion permeability is provided. The secondary battery based on the separator is less difficult to assemble, and the battery capacity is increased with high safety.

The present disclosure controls an addition ratio of the inorganic particles, the binder, and the thickening agent, the temperature of the thickened slurry in the slurrying process, and a ratio of the distance between the liquid level and the dispersion impeller to the height of the dual planetary mixing tank to be within a certain range, which is conducive to the construction of a stable steric hindrance by the thickening agent, and also contributes to the formation of a potential by the binder sufficiently adsorbed on the surfaces of the inorganic particles to provide a stable carrier for the composite of the inorganic particles and the base film. Meanwhile, through tension matching control over substrates of different thicknesses in the coating process, the substrates show better toughness and ductility, so as to realize better adhesion of the inorganic particles and the substrates. Different thicknesses of coatings match with the temperature and air supply frequency and air exhaust frequency of the drying oven, so as to ensure that the drying rate of each component in the coating is balanced, and to prevent coating cracking and excessive flowing of the binder caused by too high drying rate, such that the inorganic particles are uniformly spread on the surface of the base film. The contact ratio of the inorganic particles to the base film surface is better controlled (15%-90%) through the binder and the thickening agent, and the air permeability value of the coating per unit thickness of the coated separator is less than a product of the air permeability of the base film and the contact ratio, such that the separator is improved to a certain extent in peel strength, puncture strength of the coating per unit thickness and air permeability of the coating per unit thickness.

The peel strength of the battery separator obtained by the present disclosure is more than 30 N/m; the contact ratio of the inorganic particles to the base film in the longitudinal section of the battery separator is 15-90% through the binder and the thickening agent; the puncture strength of the coating per unit thickness is more than 6 gf/µm; and the air permeability of the coating per unit thickness is less than 20 s/100cc/µm.

Additional aspects and advantages of the present disclosure will be partially given in the following description, and partially become apparent in the following description, or will be learned by practice of the present disclosure.

### BRIEF DESCRIPTION OF DRAWINGS

The accompanying drawing, which is used to provide a further understanding of the present disclosure and constitutes a part of the specification, serves to explain the present disclosure together with the following specific implementations, but does not constitute a limitation of the present disclosure. In the accompanying drawing:

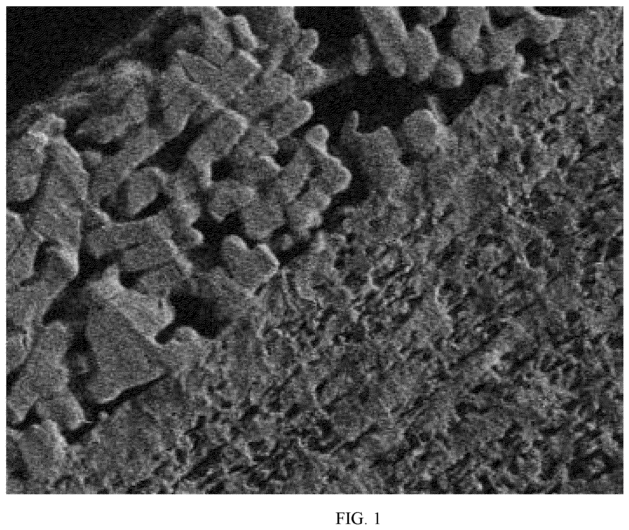

FIG. 1 shows a sectional electron micrograph of a battery separator in a thickness direction prepared by Embodiment 1 of the present disclosure.

### DETAILED DESCRIPTION OF THE INVENTION

The specific implementations of the present disclosure are described in detail below with reference to the accompanying drawing. It should be understood that the specific implementations described herein are only used to illustrate and explain the present disclosure, but not to limit the present disclosure.

In a first aspect of the present disclosure, a battery separator is provided, and includes:
a base film; and an inorganic coating provided on at least one surface of the base film,
where, the battery separator meets the following features:
   a contact ratio k of inorganic particles to the base film in a longitudinal section of the battery separator is 15-90%, preferably 30-85%, further preferably 30-65%;
   a relationship among the contact ratio k, air permeability A₁ of the base film and air permeability A₂ of the coating per unit thickness meets:
      A₁*k ≥ A₂, where a unit of the air permeability A₁ of the base film is s/100cc, and a unit of the air permeability A₂ of the coating per unit thickness is s/100cc/µm; and
      peel strength of the battery separator is more than 30 N/m, preferably more than 50 N/m, more preferably more than 100 N/m, further preferably more than 150 N/m, puncture strength of the coating per unit thickness is more than 6 gf/µm, preferably more than 9 gf/µm, further preferably more than 12 gf/µm, and air permeability of the coating per unit thickness is less than 20 s/100cc/µm, preferably less than 15 s/100cc/µm, further preferably less than 10 s/100cc/µm.

According to the present disclosure, the base film may be any material known in the art that can be used as a substrate layer of the separator, and includes a polyolefin base film, a nonwoven base film, an electrostatically spun base film, etc., preferably the polyolefin base film. There is no specific limitation on the production process of the polyolefin base film, which may be prepared by dry unidirectional stretching, bi-directional synchronous or asynchronous stretching and wet bi-directional synchronous or asynchronous stretching, preferably by the wet bi-directional synchronous or asynchronous stretching method. The polyolefin porous base film may be a polyethylene (PE) or polypropylene (PP) monolayer, or a polyethylene (PE) and polypropylene (PP) multilayer, and from the viewpoint of film-forming performance, polyethylene and copolymers are preferred, and the polyethylene may be obtained by a one-step polymerization or multi-step polymerization method. The molecular weight (viscous mean molecular weight) of the polyethylene may be 0.5 to 4 millions, for example the viscous mean molecular weight of the polyethylene is 0.5 million, 0.55 million, 0.6 million, ..., 1 million, 2 millions, 3 millions, and 4 millions. According to a specific embodiment of the present disclosure, the viscous mean molecular weight of the polyethylene is 0.6 to 3 millions, particularly preferably 0.8 to 3 millions; and a volume average particle size D50_{polyethylene} of the polyethylene is less than or equal to 1000 µm.

According to the present disclosure, a thickness of the base film may be 1 to 3 µm, for example, 1 µm, 2 µm, 3 µm, 4 µm, 5 µm, ..., 29 µm, and 30 µm. According to a specific embodiment of the present disclosure, the thickness of the base film is 3 to 20 µm.

According to the present disclosure, a porosity of the base film may be 10% to 70%, for example, 10%, 12%, 15%, ..., 69%, and 70%. According to a specific embodiment of the present disclosure, the porosity of the base film is 20% to 60%.

According to the present disclosure, the air permeability of the base film may be 40 to 350 s/100cc, for example 40 s/100cc, 45 s/100cc, 50 s/100cc, ..., 240 s/100cc, 300 s/100cc, and 350 s/100cc. According to a specific embodiment of the present disclosure, the air permeability of the base film is 80 to 200 s/100cc, and the air permeability can be tested with reference to requirements of JIS8117-2009.

According to the present disclosure, there is no specific limitation on the type of the inorganic particles, as long as electrochemical properties are stable. Based on the above reasons, inorganic particles with a dielectric constant of more than 5 and a lithium ion transfer capability are adopted. Examples that can be cited include oxide particles such as silicon dioxide (SiO₂), aluminum oxide (Al₂O₃), magnesium oxide (MgO), zirconium oxide (ZrO₂), titanium oxide (TiO₂), and calcium oxide (CaO), boehmite (ALOOH), nitride particles such as aluminum nitride (AlN) and boron nitride (BN), and insoluble ionic crystalline particles such as barium sulfate (BaSO₄), barium titanate (BaTiO₃), calcium fluoride (CaF₂), and barium fluoride (BaF₂). The inorganic particles may be selected from one of the above particles or two or more particles in any ratio. Among the particles, the oxide particles are preferred in view of the stability and potential in an electrolyte. In addition, the inorganic particles need to have a high thermal decomposition temperature (decomposition temperature higher than 500°C) and low water absorption, preferably aluminum oxide, boehmite, magnesium oxide, and silicon dioxide, especially preferably aluminum oxide and boehmite, aluminum oxide and boehmite can neutralize a by-product hydrogen fluoride formed by the reaction of the electrolyte with water and inhibit the pressure drop, thereby improving the high-temperature charge storage capacity and room temperature cycle capacity of the battery.

According to the present disclosure, there is no specific limitation on the shape of the inorganic particles, for example, plate-like, flaky, needle-like, columnar, spherical, polyhedral, blocky, rod-like, etc., and a plurality of inorganic fillers having the above-mentioned shapes can also be used in combination. From the viewpoint of improving permeability, the plate-like, blocky, polyhedral and columnar inorganic particles containing a plurality of surfaces are preferred.

According to the present disclosure, a volume average particle size D50_{inorganic particle} of the inorganic particles is 0.1 to 3 µm, for example, 0.1 µm, 0.5 µm, 0.6 µm, 0.7 µm, 0.8 µm, 1 µm, ..., 1.5 µm, 2 µm, 2.5 µm, and 3.0 µm. According to a specific embodiment of the present disclosure, the inorganic particles meet: 0.5 µm ≤ D50_{inorganic particle} ≤ 1.4 µm. The D50_{inorganic particle} is obtained according to a numerical value measured by a Mastersizer3000 particle size distributor.

According to the present disclosure, a specific surface area of the inorganic particles may be less than 100 m²/g, preferably less than 50 m²/g, more preferably less than 30 m²/g. The specific surface area of the inorganic particles is within the above range, which can improve the surface energy of the particles and improve the wetting performance of the electrolyte in the separator, thereby improving the cycle performance of the battery. In addition, the cohesion between the slurry particles and the fluidity of the slurry can be improved, and at the same time, the specific surface area of the inorganic particles may be more than 0.5 m²/g, preferably more than 3 m²/g, and the water content in the separator is effectively controlled, so as to inhibit the side reaction of water in the electrolyte, and improve the cycle performance of the battery.

According to the present disclosure, the inorganic particles may also contain particles with a lithium ion transfer capability, thereby improving the conductivity of lithium ions, and the particles with lithium ion transfer are selected from any of the following inorganic particles or mixtures of at least two inorganic particles: lithium phosphates, lithium-titanium phosphates, lithium-aluminum-titanium phosphates, lithium nitrides, lithium carbonates, lithium chlorides, lithium sulfides, and lithium hexafluorophosphates.

The inorganic coating includes inorganic particles, a binder, a thickening agent, a wetting agent and other components, and the inorganic particles are in contact with the base film through the binder.

According to the present disclosure, a thickness of the inorganic coating may be 0.5 to 10 µm, for example, 0.5 µm, 1 µm, 2 µm, 3 µm, 4 µm, 5 µm, ..., 9 µm, and 10 µm. According to a specific embodiment of the present disclosure, the thickness of the inorganic coating is 2 to 5 µm.

According to the present disclosure, the battery separator of the present disclosure meets the following characteristics.
1. The contact ratio k of the inorganic particles to the base film in the longitudinal section of the battery separator is 15-90%, for example, the contact ratio of the inorganic particles to the base film in the longitudinal section of the battery separator may be 15%, 16%, ..., 30%, 40%, 50%, 60%, 70%, 80%, 90%, and 95%.

The contact ratio (k) is a contact length of the inorganic particles and the base film in a section in a thickness direction/a total length of a contact surface of the base film and the coating.

A test method for the contact ratio k of the inorganic particles to the base film in the longitudinal section may be that:
a 10 cm × 10 cm separator was taken for longitudinal section electron microscopy, and contact interfaces k₁, k₂, k₃, ..., kₙ of the inorganic particles and the base film were labeled on the picture. Lengths l₁, l₂, l₃, ..., lₙ of the contact interfaces k₁, k₂, k₃, ..., kₙ, and the total length L of the contact surface between the coating and the base film on the picture are measured. A ratio of the sum of l₁, l₂, l₃, ..., lₙ to L is the contact ratio of the inorganic particles to the base film in the longitudinal section.

Controlling the contact ratio k can ensure that there is strong adhesion between the inorganic particles and the base film, and the peel strength of the separator is significantly improved after coating. On the other hand, the air permeability of the coating per unit thickness is effectively controlled after coating, which reduces the internal resistance of the battery and improves the cycle performance of the battery.

2. Air permeability A₁ of base film * k ≥ air permeability A₂ of coating per unit thickness.

The air permeability of the coating per unit thickness refers to a value obtained by dividing a difference between the air permeability of the separator and the air permeability of the base film by the thickness (thickness of separator - thickness of base film) of the inorganic coating . The unit of the air permeability is "s/100cc", and the thickness unit of the inorganic coating is "µm".

Controlling the relationship among k, A₁, and A₂ can greatly reduce the air permeability of the separator after coating, enhance the lithium ion transport capacity, and improve the cycle performance of the battery. Meanwhile, the peel strength and puncture strength of the coating are both improved, and the safety performance of the battery is improved.

3. The peel strength of the battery separator is more than 30 N/m, for example, the peel strength is 30 N/m, 31 N/m, ..., 79 N/m, 80 N/m, 90 N/m, 100 N/m, 110 N/m, 120 N/m, 150 N/m, 160 N/m, 170 N/m, 180 N/m, 190 N/m, 200 N/m, 220 N/m, ...;
the puncture strength of the coating per unit thickness is more than 6 gf/µm, for example, the puncture strength of the coating per unit thickness may be 6 gf/µm, 7 gf/µm, ..., 9 gf/µm, 12 gf/µm, 16 gf/µm, ...; and
the puncture strength of the coating per unit thickness refers to a value obtained by dividing a difference between the puncture strength of the separator and the puncture strength of the base film by the thickness (thickness of separator - thickness of base film) of the inorganic coating. The unit of the puncture strength is "gf", and the thickness unit of the inorganic coating is "µm".

The air permeability of the coating per unit thickness is less than 20 s/100cc/µm, for example, the air permeability of the coating per unit thickness may be 20 s/100cc/µm, 19 s/100cc/µm, ..., 2 s/100cc/µm, and 1 s/100cc/µm.

In a second aspect of the present disclosure, a preparation method for the battery separator as described in the first aspect is provided, and the method includes the following steps:
(1) a base film is provided;
(2) an inorganic coating slurry is applied to at least one surface side of the base film to obtain an inorganic coating; and
(3) the base film and the inorganic coating are dried to obtain the battery separator,
where a preparation method for the inorganic coating slurry in step (2) includes the following steps:
(2-1) 90-99 parts by weight of a solvent are added into a mixing tank, a rotation speed of an anchor paddle is set as 10 to 30 rpm, the anchor paddle is started, 1-10 parts by weight of thickening agent powder are slowly added, after addition is complete, a dispersion impeller is started, where a rotation speed of the dispersion impeller is 500 to 1300 rpm, mixing time is 80 to 120 min, and a thickening agent primary slurry is obtained;
50-60 parts by weight of a solvent are added into a dual planetary mixing tank, 32-38 parts by weight of inorganic particles are slowly added, where a volume of the inorganic particles and the solvent is kept to be 3/5 to 3/4 of volume of the dual planetary mixing tank, and a distance between a dispersion impeller and an upper liquid level of the inorganic particles and the solvent accounts for 1/4 to 1/2 of a height of the dual planetary mixing tank; a rotation speed of an anchor paddle in the dual planetary mixing tank is 10 to 30 rpm, a rotation speed of the dispersion impeller is 500 to 1300 rpm, mixing time is 10 to 20 min, and an inorganic particle primary slurry is obtained;
(2-2) 5-15 parts by weight of the thickening agent primary slurry are taken and added to the inorganic particle primary slurry, where the rotation speed of the anchor paddle in the dual planetary mixing tank is 10 to 30 rpm, the rotation speed of the dispersion impeller is 500 to 1300 rpm, mixing time is 10 to 20 min, and a thickened slurry is obtained; and
(2-3) the thickened slurry is enabled to pass through a high-speed dispersing or grinding machine, a temperature of the thickened slurry is strictly controlled to be between 15°C and 30°C in the process to obtain a semi-finished slurry, after a temperature of the semi-finished slurry returns to a room temperature, 2-10 parts by weight of a binder and 0.03-0.2 parts by weight of a wetting agent are added, and then mixing is performed for 20 to 40 min at a mixing rotation speed of 10 to 50 rpm so as to obtain the inorganic coating slurry;
pH of the inorganic coating slurry is 7 to 11, especially 7.8 to 9.8; viscosity is 5 to 200 mpa s, especially 10 to 130 mpa s, such as 60 to 80 mpa s; a volume average particle size D50_{slurry} is 0.01 to 2.5 µm, especially 0.1 to 1.2 µm, such as 0.8 to 1 µm; and a mean value of a Zeta potential absolute value is 0.025 to 0.3 V, especially 0.035 to 0.1 V, such as 0.07 to 0.1 V;
in step (2), a tension of 2.5 to 5 N/m/µm per unit thickness and unit width of the base film is controlled to be applied in a coating process, and a difference between a coating rolling speed and a coating line speed is -50 to 50 m/min in the coating process; and
in step (3), a drying temperature of the coating per unit thickness is controlled to be 20 to 50°C/µm in a drying process, air supply frequency and air exhaust frequency of a drying oven are controlled to be 20 to 45 Hz, and air supply frequency - air exhaust frequency ≤ 6 Hz.

Inorganic coating slurry and preparation:
the pH of the inorganic coating slurry is 7 to 11, the pH of the slurry is within this range, the charge distribution in the slurry is balanced, and a spatial stabilization structure formed among the particles is not likely to be broken. The viscosity of the slurry is 5 to 200 mpa s, and the fluidity of the slurry is significantly improved, thereby reducing the processing difficulty of the coating. The volume average particle size D50_{slurry} of the slurry is 0.01 to 2.5 µ m, and the volume average particle size of the slurry is within this range, which can ensure the uniformity of the coating after coating. The mean value of the Zeta potential absolute value of the prepared slurry is 0.025 to 0.3 V, and the larger the Zeta potential absolute value is, the more balanced the charge distribution of the prepared slurry is, and the better the stability and shelf life of the slurry are.

The pH value is tested by a pH tester. The viscosity is a numerical value measured under 25°C and a rotation speed of 40 rpm by using a Brookfield viscometer. The volume average particle size is a numerical value measured by a Mastersizer3000 particle size distributor. A Zeta potential is a mean value of the absolute value measured by a Stabino Zeta potential meter.

According to the present disclosure, the solvent is water or any solvent of organic solvents. As organic solvents, the following may be cited: aliphatic hydrocarbons such as cyclopropane and cyclohexane; ketones such as ethyl methyl ketone and cyclohexanone; aromatic hydrocarbons such as benzene and toluene; nitriles such as acetonitrile and propionitrile; esters such as ethyl acetate and butyl acetate; alcohols such as methanol, ethyl alcohol, isopropanol, and glycols; ethers such as tetrahydrofuran and glycol diethyl ether; and amides such as N-methyl pyrrolidone and N,N-dimethylformamide. These solvents may be used independently or in a mixed mode. Water is preferably used as the solvent to prepare the slurry.

According to the present disclosure, there is no specific limitation on the type of the binder, which may be any polymer in the art that can be used as an inorganic particle binder, and examples that may be cited include acrylates, polyvinylidene fluoride, styrene-butadiene rubber, polyacrylonitrile, polyvinyl alcohol, vinyl acetate, and the like.

According to the present disclosure, the binder may be an acrylate polymer, which may be selected from a water-soluble acrylate polymer, an emulsion-type acrylate polymer or a mixture of the two in any ratio, preferably the emulsion-type acrylate polymer.

According to the present disclosure, the emulsion-type acrylate polymer is an acrylate polymer in a water emulsion type, i.e., a milky or bluish appearance, a primary monomer is a monomer containing functional groups of carboxylic acids or esters, which may be at least one of, for example, acrylic acid, methacrylic acid, itaconic acid, maleic acid, fumaric acid, methyl acrylate, ethyl acrylate, propyl acrylate, butyl acrylate, octyl acrylate, lauryl acrylate, stearate acrylate, methyl methacrylate, ethyl methacrylate, isopropyl methacrylate, butyl methacrylate, isobutyl methacrylate, 2-hydroxypropyl acrylate, 2-hydroxyethyl acrylate, octyl methacrylate, n-hexyl acrylate, dodecyl methacrylate, decyl methacrylate, 2-ethylhexyl acrylate, ethylene glycol dimethacrylate, diethylene glycol dimethacrylate, and trimethylol 1,1,1-propane triacrylate.

As the thickening agent, polysaccharides are preferred. Natural polymer compounds, cellulose semi-synthetic polymer compounds, etc. may be cited. The thickening agent may be used independently or two or more thickening agents may be used at any ratio. The cellulose semi-synthetic compounds such as carboxymethyl cellulose, sodium carboxymethyl cellulose, hydroxyethyl cellulose, hydroxypropyl cellulose, and the like are preferred from the viewpoint of improving the dispersibility of the inorganic particles.

In addition, the degree of etherification of the cellulose semi-synthetic polymer compounds is preferably more than 0.5, more preferably more than 0.7, preferably less than 1.2, more preferably less than 1.0. The degree of etherification is the degree of substitution of hydroxyl groups (3) of each anhydrous glucose unit in cellulose substituted by a substituent group such as carboxymethyl. The degree of etherification is within a range of 0 to 3, which can ensure the affinity of the cellulose and the solvent, and also form a certain spatial stabilization structure, improve the dispersion of the inorganic particles in the solvent, and prolong the storage time of the slurry.

The average degree of polymerization of the cellulose semi-synthetic polymer compounds is preferably more than 500, more preferably more than 1000, preferably less than 2500, more preferably less than 2000, especially preferably less than 1500. The average degree of polymerization of the thickening agent forms a certain steric hindrance through the action with the solvent to promote the fluidity of the slurry, thereby improving the stability and the coating effect of the slurry. By controlling the average degree of polymerization of the thickening agent within the above range, the stability and the storage time limit of the slurry and the uniformity of the coating during coating are improved.

The wetting agent is mainly an alkyl-based surfactant, a silicone-based surfactant, a fluorine-based surfactant, or an ether-based surfactant. The dosage of the wetting agent is preferably less than 0.5% by weight of the coating, more preferably less than 0.2%, preferably more than 0.01%, more preferably more than 0.03%. Controlling the addition amount of the surfactant to be within the above range can reduce the surface tension of the slurry on the porous film and improve the wetting or spreading effect of the slurry. If the addition amount of the surfactant is more than 5% by weight of the slurry, the wetting agent will penetrate into holes of the substrate, thereby affecting the lithium ion transport and the adhesion of the inorganic particles and the substrate, and resulting in falling out of the powder of the separator and the increase in the internal resistance of the battery in the process of battery winding, and the capacity becomes low.

According to the present disclosure, the rotation speed of the anchor paddle is 10 to 30 rpm, for example, 10 rpm, 15 rpm, ..., and 30 rpm. The rotation speed of the dispersion impeller is 500 to 1300 rpm, for example, 500 rpm, 600 rpm, ..., 1200 rpm, and 1300 rpm, the mixing time is 80 to 120 min, for example, 80 min, 90 min, ..., 100 min, and 120 min.

According to the present disclosure, the volume of the inorganic particles and the solvent is kept between 3/5 and 3/4 of volume of the dual planetary mixing tank, for example, 3/5, 5/8, ..., 29/40, and 3/4. The distance between the dispersion impeller and the upper liquid level of the inorganic particles and the solvent accounts for 1/4 to 1/2 of the height of the dual planetary mixing tank, for example, 1/4, 7/24, ..., 11/24, and 1/2. The volume ratio and the distance between the liquid level and the dispersion impeller are controlled within the ranges, in the mixing process, the inorganic particles can be uniformly dispersed in the solvent, and the stability of the slurry is improved.

According to the present disclosure, the thickened slurry passes through a high-speed dispersing or grinding machine, and in the process, the temperature of the thickened slurry is strictly controlled to be 15°C to 30°C, for example, 15°C, 16°C, ..., 29°C, and 30°C. When the temperature is below 5°C, gel particles condense to form gel clusters, which is not conducive to the dispersion in the latter process, and missed coating on the film surface occurs in the coating process. When the temperature is above 30°C, the steric hindrance formed by the glue particles is destroyed, the slurry olefination occurs, and stability is reduced. After the temperature of a semi-finished product slurry returns to the room temperature, the binder and the wetting agent are added and then mixed, the mixing rotation speed of the anchor paddle is controlled to be 10 to 50 rpm, for example, 10 rpm, 11 rpm, ..., 49 rpm, and 50 rpm. When the mixing rotation speed is less than 10 rpm, the binder and the wetting agent can not be uniformly dispersed in the slurry, resulting in poor uniformity of the coating of the coated separator, no increase of the uniformity of the coating of the coated separator and the reduction of the contact ratio of the inorganic particles to the base film in the longitudinal section of separator, thereby affecting the peel strength of the separator. When the mixing rotation speed is more than 50 rpm, the binder is sheared into a film, a crust is formed, resulting in an increase in the number of large particles in the slurry, poor consistency of the coating, and deterioration of the heat resistance of the separator, and at the same time, a large number of bubbles exist in the slurry, the slurry utilization rate is reduced, and the cost increases.

The inorganic coating slurry may contain any other components in addition to the above components. Dispersants, electrolyte dispersion inhibitors, etc. may be cited. There is no special limitation on the above components as long as they do not adversely affect the lithium battery, any one or two or more of the above components may be used, but the addition ratio shall not exceed 5% by weight of the slurry.

By controlling the addition amount of each component, the mixing rotation speed during slurry preparation, the material temperature during dispersion and other formulation design and process control, the inorganic particles of the prepared slurry are uniformly dispersed, the volume average particle size D50_{slurry} is 0.01 to 2.5 µm, the inorganic particles in the slurry are suspended in the solvent, and the mean value of the Zeta potential absolute value is 0.025 to 0.3 V.

Coating and drying process:
According to the present disclosure, the tension applied to the base film during coating is controlled to be 2.5 N/m/µm, 1.5 N/m/µm, ..., 4.5 N/m/µm, and 5 N/m/µm. By setting the coating tension corresponding to base films of different thicknesses and widths, the elongation of the base film in the process of high-speed coating can be reduced, and at the same time, a difference between the coating rolling speed and the coating speed in the process is controlled, and the difference is controlled to be -50 to 50 m/min, thereby ensuring that the slurry is better spread on the base film, preventing the slurry from emulsion breaking under high-speed shear, and also ensuring the adhesion between the inorganic particles and a percentage of the contact surface of the inorganic particles to the surface of the base film. The temperature of the coating per unit thickness in the drying process is 20 to 50°C/µm, the air supply frequency and air exhaust frequency of the drying oven are 20 to 45 Hz, and air supply frequency - air exhaust frequency ≤ 6Hz. The temperature and the air supply frequency and air exhaust frequency of the drying oven are set within this range, such that the rate of slurry in the drying process is controlled, coating chaffing due to too high rate is avoided, the binder and the thickening agent can be fully cured, a certain contact area is formed, and therefore, the peel strength of the separator is improved.

According to the present disclosure, there is no specific limitation on the coating method of the slurry, and a coating method, an impregnation method and other methods may be selected for coating. As the coating method, methods such as a doctor-blade method, a reverse roll method, a direct roll method, a microgravure roll method, an extrusion method, a spraying method, and a spot coating method may be cited. Considering the uniformity of the thickness of the porous film, the microgravure roll method is preferred for coating.

According to the present disclosure, there is no special limitation on the drying method, and drying methods such as hot air, low-humidity air, vacuum drying, spray drying, freeze drying and the like may be selected.

In a third aspect of the present disclosure, a secondary battery is provided, and includes the battery separator as described in the first aspect.

According to the present disclosure, the secondary battery may include a lithium-ion battery and a sodium-ion battery.

The separator prepared by the preparation method for the separator and the secondary battery have the same advantages as the separator described above, which will not be repeated here.

The present disclosure is described below with reference to specific embodiments. It should be noted that these embodiments are merely descriptive and do not limit the present disclosure in any way. Unless otherwise specified, raw materials, reagents, methods, and the like employed in the embodiments are conventional in the art.

### Test method for peel strength:

A 2.5cm × 30cm mold is used to cut a sample, the sample is flat pasted to a short steel ruler with double-sided adhesive stuck, rolled back and forth three times with a pressure roller, manually peeled off by 1 cm and clamped to a tensile machine for a 180° test, where the tensile speed is 50 mm/min, and an average value of results measured three times is taken.

### Test method for thickness:

A long strip of 20 cm × 10n cm coated width is cut, where n is a natural number greater than 2. A point is taken every 10 cm interval with a Mal thickness gauge, the thicknesses of the base film and a coated film are measured, the difference between the thicknesses of the base film and the coated film is a coating thickness, and an average value of all coating thicknesses is recorded as an average coating thickness.

### Test method for air permeability:

Testing is performed with reference to requirements of JIS8117-2009.

A coating master roll is cut along the TD direction, width ≥ 5 cm, and a sampling TD width of a coating finished product is less than 5 cm, a small measuring head is used for testing, a Wang-type air permeability tester is used, test time is set to be 3 S, the air permeabilities of the base film and the coated film are measured, a difference between the air permeabilities of the base film and the coated film is a coating air permeability, an average value of all coating air permeabilities is recorded as an average coating air permeability, and a ratio of the average coating air permeability to the average coating thickness is recorded as the air permeability of the coating per unit thickness.

### Test method for puncture strength:

Testing is performed with reference to requirements of ASTM D4833-00e1 or GB/T 10004-2008.

A sample of about 50 mm in width is cut along the TD of the film roll, and placed under a fixed fixture of a sample table for testing; and a needle is a hemisphere in a shape of Φ = 1.0 mm, and the running speed of the needle is 1 mm/s. The puncture strengths of the base film and the coated film are measured, a difference between the puncture strengths of the base film and the coated film is a coating puncture strength, an average value of all coating puncture strengths is recorded as an average coating puncture strength, and a ratio of the average coating puncture strength to the average coating thickness is recorded as the puncture strength of the coating per unit thickness.

### Test method for contact ratio of inorganic particles to base film in longitudinal section:

A 10 cm×10 cm smooth and flat inorganic coated film is taken for longitudinal section electron microscopy, contact interfaces k₁, k₂, k₃, ..., kₙ of the inorganic particles and the base film are labeled on the picture, lengths l₁, l₂, l₃, ..., lₙ of the contact interfaces k₁, k₂, k₃, ..., kₙ, and the total length L of the contact surface between the coating and the base film on the picture are measured, and a ratio of the sum of l₁, l₂, l₃, ..., lₙ to L is the contact ratio of the inorganic particles to the base film in the longitudinal section.

### Embodiment 1

### Preparation of inorganic coating slurry:

(1) preparation of thickening agent primary slurry: 95 kg of ultrapure water is added into a mixing tank, a rotation speed of an anchor paddle is set as 20 rpm, the anchor paddle is started, 5 kg of thickening agent sodium carboxymethyl cellulose (Daicel, 1220) powder is slowly added, after addition is complete, a dispersion impeller is started, a rotation speed of the dispersion impeller is 1200 rpm, mixing time is 100 min, and 100 kg of thickening agent primary slurry is obtained;
(2) preparation of Aluminum oxide primary slurry: 52.9 kg of ultrapure water is added into a dual planetary mixing tank, 35 kg of aluminum oxide with volume average particle size D50_{inorganic particle} of 0.912 µm is slowly added, where the volume of the aluminum oxide and the ultrapure water is maintained to be 72.04% that of the dual planetary mixing tank, the distance between the dispersion impeller and the liquid level of the aluminum oxide and the ultrapure water is 32.34% of the height of the dual planetary mixing tank, the rotation speed of the anchor paddle is 20 rpm, the rotation speed of the dispersion impeller is 1000 rpm, the mixing time is 15 min, and 87.9 kg of aluminum oxide primary slurry is obtained;
(3) 7.5 kg of thickening agent primary slurry is added into the 87.9 kg of aluminum oxide primary slurry, and the rotation speed of the anchor paddle of the dual planetary mixing tank, the rotation speed of the dispersion impeller and the mixing time in step (2) are adopted, so thickened slurry is obtained; and
(4) the thickened slurry passes through a high-speed dispersing and grinding machine, a temperature of the thickened slurry is controlled to be 17°C in the process to obtain a semi-finished slurry, after the temperature of the semi-finished slurry returns to a room temperature, 4.3 kg of a binder acrylate (Zeon; 900B) and 0.05 kg of a wetting agent (Guangdong Guoyuanhang TEGO202E) are added and mixed for 30 min, the mixing rotation speed is controlled to be 20 rpm, and a finished slurry is obtained. pH of the obtained finished slurry is 8.39, viscosity is 64.1 mpa s, the volume average particle size D50_{slurry} of the slurry is 0.897 µm, and the Zeta potential mean value of the slurry is -0.0871 V.

### Preparation of separator:

A polyethylene base film with a thickness of 5 µm (made by Sinoma Lithium Battery Separator Co., Ltd., air permeability 126 s/100cc) is used; the coating tension of 5 N/m/µm is adopted, and the speed of a coating machine and the speed of a coating roller in the coating process are 120 m/min and 100 m/min respectively, the prepared finished slurry is applied on one surface of the base film, the prepared coated separator is dried by the drying oven at a drying temperature of 22°C/µm, the air supply frequency and air exhaust frequency of the drying oven are 27 Hz and 30 Hz respectively, the coated film is obtained, and the cross-section electron microscopy diagram in the thickness direction is shown in FIG. 1.

Upon measurement, the contact ratio k of the inorganic particles to the base film in the longitudinal section of the coated separator is 50.37%.

The peel strength is 204 N/m, the thickness of the coating is 2.9 µm, the puncture strength of the coating per unit thickness is 12.2 gf/µm, the air permeability of the separator is 157 s/100cc, and the air permeability of the coating per unit thickness is 10.7 s/100cc/µm.

### Embodiments 2-6 and Comparative Examples 1-4

The specific raw materials, preparation parameters, and separator parameters and properties of the remaining embodiments and comparative examples are shown in Table 1 and Table 2 below (all parts not listed are the same as Embodiment 1).

**Table 1**

| | | | Embodi ment 1 | Embodi ment 2 | Embodim ent 3 | Embodim ent 4 | Embodim ent 5 |
|---|---|---|---|---|---|---|---|
| Slurry compo sition | Non-conductiv e particle | Type | Aluminu m oxide | Aluminu m oxide | Aluminu m oxide | Boehmite | Boehmite |
| | | Dosage/kg | 35 | 35 | 35 | 35 | 35 |
| | | D50_{inorganic particle} | 0.912 | 0.912 | 0.912 | 0.908 | 0.908 |
| | Solvent | Type | Water | Water | Water | Water | Water |
| | | Dosage/kg | 52.9 | 55.7 | 51.5 | 52.9 | 52.9 |
| | Binder | Dosage/kg | 4.3 | 3 | 8 | 4.3 | 4.3 |
| | Thickene d primary slurry | Mass concentration | 5% | 5% | 5% | 5% | 5% |
| | | Dosage/kg | 7.5 | 5 | 10.5 | 7.5 | 7.5 |
| | Wetting agent | Dosage/kg | 0.05 | 0.05 | 0.05 | 0.05 | 0.05 |
| Slurry prepar ation | Step (2)/(3) | Rotation speed of anchor paddle /rpm | 20 | 20 | 20 | 20 | 20 |
| | | Rotational speed of dispersion impeller/rpm | 1000 | 1100 | 1100 | 1000 | 1000 |
| | | Volume percentage of inorganic particle primary slurry to tank body/% | 72.04 | 74.34 | 70.90 | 72.04 | 72.04 |
| | | Height percentage of distance between interface liquid level and dispersion impeller to tank body/% | 32.34 | 34.63 | 31.19 | 32.34 | 32.34 |
| | | Time/min | 15 | 15 | 15 | 15 | 15 |
| | Step (4) | Slurry temperature/°C | 17 | 28 | 20 | 23 | 23 |
| | | Mixing rotation speed/rpm | 20 | 20 | 20 | 20 | 20 |
| Slurry propert y | pH | | 8.39 | 8.87 | 8.17 | 8.41 | 8.41 |
| | Viscosity/cp | | 64.1 | 29.2 | 78.5 | 63 | 63 |
| | Volume average particle size/µm | | 0.897 | 0.891 | 0.889 | 0.895 | 0.895 |
| | Zeta potential/v | | -0.0871 | -0.0713 | -0.0845 | -0.0876 | -0.0876 |
| Coatin g and drying | Coating tension/N/m/µm | | 5 | 5 | 4.5 | 2.5 | 4.5 |
| | Speed of coating machine/m/min | | 120 | 120 | 120 | 120 | 120 |
| | Speed of coating roller/m/min | | 100 | 100 | 100 | 120 | 80 |
| | Air supply of drying oven/Hz | | 27 | 27 | 27 | 30 | 24 |
| | Air exhaust of drying oven/Hz | | 30 | 30 | 30 | 30 | 30 |
| | Temperature of drying oven /°C/µm | | 22 | 22 | 22 | 20 | 26 |
| Featur e of separat or | Thickness of base film/µm | | 5 | 5 | 5 | 9 | 7 |
| | Air permeability A₁ of base film/(s/100cc) | | 126 | 125 | 131 | 133 | 135 |
| | Thickness of coating/µm | | 2.9 | 3 | 3.1 | 3.1 | 2.6 |
| | Contact ratio k of inorganic particles to base film in longitudinal section of separator/% | | 50.37 | 42.62 | 64.34 | 52.7 | 53.11 |
| | Air permeability of separator/(s/100cc) | | 157 | 149 | 181 | 168 | 166 |
| Propert ies of separat or | Puncture strength of coating per unit thickness/(gf/µm) | | 12.2 | 15.1 | 21.4 | 16.3 | 16.8 |
| | Peel strength/(N/m) | | 204 | 179 | 215 | 193 | 191 |
| | Air permeability A₂ of coating per unit thickness (s/100cc/µm) | | 10.7 | 8 | 16.1 | 11.29 | 11.48 |

**Table 2**

| | | | Embodim ent 6 | Comparative Example 1 | Comparativ e Example 2 | Comparative Example 3 | Comparative Example 4 |
|---|---|---|---|---|---|---|---|
| Slurry composit ion | Non-conductive particle | Type | Boehmite | Boehmite | Boehmite | Boehmite | Boehmite |
| | | Dosage/kg | 35 | 35 | 35 | 35 | 35 |
| | | D50_{inorganic particle} | 0.908 | 0.908 | 0.908 | 0.908 | 0.908 |
| | Solvent | Type | Water | Water | Water | Water | Water |
| | | Dosage/kg | 52.9 | 56.1 | 58 | 52.9 | 40.2 |
| | Binder | Dosage/kg | 4.3 | 3 | 4 | 4.3 | 12.5 |
| | Thickened primary slurry | Mass concentration | 5% | 5% | 5% | 5% | 5% |
| | | Dosage/kg | 7.5 | 5 | 6 | 7.5 | 12 |
| | Wetting agent | Dosage/kg | 0.05 | 0.05 | 0.05 | 0.05 | 0.05 |
| Slurry preparati on | Step (2)/(3) | Rotation speed of anchor paddle/rpm | 20 | 25 | 20 | 20 | 20 |
| | | Rotational speed of dispersion impeller/ rpm | 1000 | 1200 | 1000 | 1000 | 1000 |
| | | Volume percentage of inorganic particle primary slurry to tank body/% | 72.04 | 74.67 | 76.22 | 72.04 | 61.64 |
| | | Height percentage of distance between interface liquid level and dispersion impeller to tank body/% | 32.34 | 34.96 | 20.18 | 32.34 | 21.93 |
| | | Time/min | 15 | 15 | 15 | 15 | 15 |
| | Step (4) | Slurry temperature/°C | 23 | 45 | 27 | 23 | 35 |
| | | Mixing rotation speed/rpm | 20 | 20 | 20 | 20 | 20 |
| Slurry property | pH | | 8.41 | 8.9 | 8.74 | 8.37 | 8.01 |
| | Viscosity/cp | | 63 | 27.1 | 32 | 62.1 | 114.4 |
| | Volume average particle size/µm | | 0.895 | 1.071 | 1.278 | 0.844 | 1.356 |
| | Zeta potential/v | | -0.0876 | -0.021 | -0.015 | -0.0862 | -0.0274 |
| Coating and drying | Coating tension/N/m/µm | | 3.5 | 5 | 5 | 6 | 6.2 |
| | Speed of coating machine /m/min | | 120 | 120 | 120 | 120 | 120 |
| | Speed of coating roller/m/min | | 95 | 100 | 100 | 60 | 70 |
| | Air supply of drying oven/Hz | | 29 | 27 | 27 | 27 | 28 |
| | Air exhaust of drying oven/Hz | | 32 | 30 | 30 | 35 | 37 |
| | Temperature of drying oven/°C/µm | | 21 | 22 | 22 | 25 | 29 |
| Feature of separator | Thickness of base film/µm | | 7 | 5 | 5 | 5 | 5 |
| | Air permeability A₁ of base film/(s/100cc) | | 142 | 125 | 127 | 128 | 125 |
| | Thickness of coating/µm | | 2.8 | 3.1 | 2.7 | 2.5 | 2.6 |
| | Contact ratio k of inorganic particles to base film in longitudinal section of separator/% | | 48.99 | 11.03 | 13.95 | 12.73 | 14.16 |
| | Air permeability of separator/(s/100cc) | | 167 | 131 | 141 | 139 | 182 |
| Propertie s of separator | Puncture strength of coating per unit thickness/(gf/µm) | | 11.7 | 5.3 | 4.9 | 3.7 | 4.1 |
| | Peel strength/(N/m) | | 176 | 27 | 28 | 20 | 25 |
| | Air permeability A₂ of coating per unit thickness (s/100cc/µm) | | 10 | 1.9 | 5.2 | 4.4 | 21.9 |

ANALYSIS: As can be seen from the above tables, in Embodiments 1-6, by controlling the content of each component in the slurry, the volume percentage of non-conductive particle primary slurry to the tank body, the height percentage of the distance between the interface liquid level of the non-conductive particle primary slurry and the dispersion impeller to the tank body, the temperature of the dispersed material, and the process in the coating process, k is always within the range of 15% to 90%, and A₁ * k ≥ A₂, such that the prepared separator has excellent peel strength, high puncture strength increase, and low air permeability increase. However, in Comparative Examples 1-4, the temperature of the dispersed material, the height percentage of the distance between the interface liquid level of the non-conductive particle primary slurry and the dispersion impeller to the tank body, and the production process in the coating process are adjusted respectively, k is not between 15% and 90%, or A₁ * k < A₂, such that the prepared separator cannot take into account the balance of the three properties.

Although the embodiments of the present disclosure have been shown and described above, it can be understood that the above embodiments are illustrative and cannot be construed as a limitation of the present disclosure, and changes, modifications, substitutions and variations can be made by those skilled in the art within the range of the present disclosure.

## Claims

1. A battery separator, comprising:
a base film; and
an inorganic coating provided on at least one surface of the base film,
wherein a contact ratio k of inorganic particles to the base film in a longitudinal section of the battery separator is 15-90%; and
a relationship among the contact ratio k, air permeability A₁ of the base film and air permeability A₂ of a coating per unit thickness meets:
A₁*k ≥ A₂, wherein a unit of the air permeability A₁ of the base film is s/100cc, and a unit of the air permeability A₂ of the coating per unit thickness is s/100cc/µm.

2. The battery separator according to claim 1, wherein peel strength of the battery separator is more than 30 N/m, puncture strength of the coating per unit thickness is more than 6 gf/µm, and the air permeability of the coating per unit thickness is less than 20 s/100cc/µm.

3. The battery separator according to claim 1, wherein the contact ratio k of the inorganic particles to the base film in the longitudinal section of the battery separator is 30-85%; and/or peel strength of the battery separator is more than 50 N/m, a puncture strength increase caused by the coating per unit thickness is more than 9 gf/µm, and an air permeability increase caused by the coating per unit thickness is less than 15 s/100cc/µm.

4. The battery separator according to claim 1, wherein a thickness of the base film is 1 to 30 µm; and/or
air permeability of the base film is 40 to 350 s/100cc.

5. The battery separator according to claim 1, wherein the inorganic particles are one or more selected from silicon dioxide, aluminum oxide, magnesium oxide, zirconium oxide, titanium oxide, calcium oxide, boehmite, aluminum nitride, boron nitride, barium sulfate, calcium fluoride, or barium fluoride; and/or
a volume average particle size D50_{inorganic particle} of the inorganic particles is 0.1 to 3 µm.

6. The battery separator according to claim 1, wherein a thickness of the inorganic coating is 0.5 to 10 µm.

7. A preparation method for the battery separator according to any one of claims 1 to 6, comprising the following steps:
(1) providing a base film;
(2) applying an inorganic coating slurry to at least one surface side of the base film to obtain an inorganic coating; and
(3) drying the base film and the inorganic coating to obtain the battery separator,
wherein a preparation method for the inorganic coating slurry in step (2) comprises the following steps:
(2-1) adding 90-99 parts by weight of a solvent into a mixing tank, setting a rotation speed of an anchor paddle as 10 to 30 rpm, starting the anchor paddle, adding 1-10 parts by weight of thickening agent powder, after addition is complete, starting a dispersion impeller, wherein a rotation speed of the dispersion impeller is 500 to 1300 rpm, and mixing time is 80 to 120 min, and obtaining a thickening agent primary slurry;
adding 50-60 parts by weight of a solvent into a dual planetary mixing tank, adding 32-38 parts by weight of inorganic particles, wherein a volume of the inorganic particles and the solvent is kept to be 3/5 to 3/4 of volume of the dual planetary mixing tank, and a distance between a dispersion impeller and an upper liquid level of the inorganic particles and the solvent accounts for 1/4 to 1/2 of a height of the dual planetary mixing tank; a rotation speed of an anchor paddle in the dual planetary mixing tank is 10 to 30 rpm, a rotation speed of a dispersion impeller is 500 to 1300 rpm, and mixing time is 10 to 20 min, and obtaining an inorganic particle primary slurry;
(2-2) taking and adding 5-15 parts by weight of the thickening agent primary slurry to the inorganic particle primary slurry, wherein the rotation speed of the anchor paddle in the dual planetary mixing tank is 10 to 30 rpm, the rotation speed of the dispersion impeller is 500 to 1300 rpm, and mixing time is 10 to 20 min, and obtaining a thickened slurry; and
(2-3) enabling the thickened slurry to pass through a high-speed dispersing or grinding machine, controlling a temperature of the thickened slurry to be between 15°C and 30°C in the process to obtain a semi-finished slurry; after a temperature of the semi-finished slurry returns to a room temperature, adding 2-10 parts by weight of a binder and 0.03-0.2 parts by weight of a wetting agent, and then mixing for 20 to 40 min at a mixing rotation speed of 10 to 50 rpm so as to obtain the inorganic coating slurry;
in step (2), a tension of 2.5 to 5 N/m/µm per unit thickness and unit width of the base film is controlled to be applied in a coating process, and a difference between a coating rolling speed and a coating line speed is -50 to 50 m/min in the coating process; and
in step (3), a drying temperature of the coating per unit thickness is controlled to be 20 to 50°C/µm in a drying process, air supply frequency and air exhaust frequency of a drying oven are both 20 to 45 Hz, and air supply frequency - air exhaust frequency ≤ 6 Hz.

8. The preparation method according to claim 7, wherein parameters of the inorganic coating slurry in step (2) are as follows: pH is 7 to 11, viscosity is 5 to 200 mpa s, a volume average particle size D50_{slurry} is 0.01 to 2.5 µm, and a mean value of a Zeta potential absolute value is 0.025 to 0.3 V.

9. The preparation method according to claim 7, wherein a thickening agent is one or more selected from carboxymethyl cellulose, sodium carboxymethyl cellulose, hydroxyethyl cellulose, or hydroxypropyl cellulose; and/or
the binder is one or more selected from acrylate, polyvinylidene fluoride, styrene-butadiene rubber, polyacrylonitrile, polyvinyl alcohol, or vinyl acetate; and/or
the wetting agent is one or more selected from an alkyl-based surfactant, a silicone-based surfactant, a fluorine-based surfactant, or an ether-based surfactant.

10. A secondary battery, comprising the battery separator according to any one of claims 1 to 6.
